(19) **Europäisches Patentamt** / **European Patent Office** / **Office européen des brevets**

(11) **EP 3 215 338 B1**

(12) **FASCICULE DE BREVET EUROPEEN**

(45) Date de publication et mention de la délivrance du brevet:
**05.07.2023 Bulletin 2023/27**

(21) Numéro de dépôt: **15798163.0**

(22) Date de dépôt: **30.10.2015**

(51) Classification Internationale des Brevets (IPC):
**B29C 31/04** *(2006.01)* **B29C 31/06** *(2006.01)*
**B29C 39/00** *(2006.01)* **B29C 39/24** *(2006.01)*
**B29D 11/00** *(2006.01)*

(52) Classification Coopérative des Brevets (CPC):
**B29D 11/00432; B29C 31/04; B29C 31/06; B29C 39/006; B29C 39/24;** B29C 2945/76056; B29C 2945/76545; B29C 2945/76832

(86) Numéro de dépôt international:
**PCT/FR2015/052938**

(87) Numéro de publication internationale:
**WO 2016/071612 (12.05.2016 Gazette 2016/19)**

(54) **DISPOSITIF D'ALIMENTATION D'UN DISPOSITIF DE MOULAGE, LIGNE DE MOULAGE ET PROCÉDÉ DE PILOTAGE DE LA LIGNE DE MOULAGE**

ZUFÜHRVORRICHTUNG FÜR EINE FORMVORRICHTUNG, FORMANLAGE UND VERFAHREN ZUR STEUERUNG DER BESAGTEN FORMANLAGE

SUPPLY DEVICE FOR A MOLDING DEVICE, MOLDING LINE AND METHOD FOR CONTROLLING SAID MOLDING LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2014 FR 1460738**

(43) Date de publication de la demande:
**13.09.2017 Bulletin 2017/37**

(73) Titulaire: **Essilor International**
**94220 Charenton-le-Pont (FR)**

(72) Inventeurs:
- **VEQUE, Eric**
  **94227 Charenton-Le-Pont Cedex (FR)**
- **GENTILS, Hervé**
  **94227 Charenton-Le-Pont Cedex (FR)**

(74) Mandataire: **Jacobacci Coralis Harle**
**32, rue de l'Arcade**
**75008 Paris (FR)**

(56) Documents cités:
FR-A1- 2 856 007    US-A- 5 187 001
US-A- 5 382 394    US-A- 5 435 943
US-A1- 2006 145 380

Processed by Luminess, 75001 PARIS (FR)

**Description**

DOMAINE TECHNIQUE AUQUEL SE RAPPORTE L'INVENTION

La présente invention concerne de manière générale le domaine du moulage de mélanges polymérisables, notamment réactifs.

Selon la revendication 1, elle concerne en particulier un dispositif d'alimentation d'au moins un dispositif de moulage en un mélange polymérisable comprenant au moins deux réactifs.

Elle concerne également, une ligne de moulage comprenant, en communication fluidique d'amont en aval dans le sens de l'écoulement fluidique, un dispositif de distribution de réactifs, un dispositif de mélange desdits réactifs pour obtenir un mélange polymérisable, et un dispositif d'alimentation.

Selon la revendication 14, elle concerne enfin un procédé de pilotage d'une telle ligne de moulage.

Elle trouve une application particulièrement avantageuse, mais pas exclusivement, pour la fabrication d'articles d'optique transparents tels que des ébauches et lentilles optiques, en particulier ophtalmiques, et notamment des ébauches de verres de lunettes et lunettes solaires ou correctrices de vue.

ARRIERE-PLAN TECHNOLOGIQUE

Afin d'alimenter simultanément plusieurs moules d'un dispositif de moulage à partir d'un seul dispositif d'alimentation, notamment en un mélange polymérisable réactif, l'homme du métier est confronté à différents problèmes.

Un problème majeur consiste à assurer une alimentation satisfaisante de tous les moules dans des conditions stables, conditions qui dépendent, entre autres, de la pression à l'entrée du dispositif de moulage, de la pression à l'entrée des moules, du volume d'alimentation, ou encore de la viscosité du mélange reçu par les moules, notamment dans le cas d'un mélange polymérisable réactif.

Le problème qui consiste à alimenter plusieurs moules simultanément à partir d'un dispositif d'alimentation a déjà été adressé par le passé.

Néanmoins, les dispositifs d'alimentation existants sont souvent complexes et coûteux puisqu'ils prévoient des commandes individualisées relatives à chacun des moules du dispositif de moulage.

D'autre part, dans les dispositifs de moulage de l'art antérieur, la stabilité d'alimentation, lorsqu'elle est obtenue, est associée à une perte importante en matière de moulage.

Ainsi, le brevet FR2407805 divulgue une ligne de moulage dans laquelle, pour alimenter une pluralité de moules d'un dispositif de moulage, il est nécessaire, dans le dispositif d'alimentation, d'associer à chaque moule un élément de commande pour régler l'alimentation du moule en matériau de moulage.

On connaît également des documents FR2856007 et US5435943 des dispositifs d'alimentation de moules en un mélange polymérisable.

OBJET DE L'INVENTION

Afin de remédier à la situation précitée de l'état de la technique, la présente invention propose d'alimenter un ou plusieurs dispositifs de moulage, comprenant chacun une pluralité de moules, au moyen d'un seul dispositif d'alimentation, qui permet de réguler la pression à l'entrée des dispositifs de moulage et à l'entrée des moules, et de récupérer la matière de moulage non utilisée.

L'invention est définie par un dispositif de moulage selon les caractéristiques de la revendication 1.

L'invention concerne aussi une ligne de moulage comportant ce dispositif d'alimentation.

L'invention propose également un procédé de pilotage de la ligne de moulage incorporant un dispositif d'alimentation selon l'invention.

Plus particulièrement, on propose selon l'invention un dispositif d'alimentation d'au moins un dispositif de moulage en un mélange polymérisable, ledit dispositif d'alimentation comprenant, d'amont en aval, un réservoir tampon adapté à recevoir ledit mélange polymérisable par une entrée dudit réservoir tampon, et un circuit d'alimentation bouclé avec ce réservoir tampon pour, dans l'ordre, amener le mélange polymérisable à une entrée dudit au moins un dispositif de moulage et renvoyer une partie du mélange polymérisable dans le réservoir tampon par une conduite de retour.

Par « dans l'ordre », on entend qu'une partie du mélange polymérisable est renvoyée au réservoir tampon en aval de ladite entrée dudit au moins un dispositif de moulage.

Plus précisément, l'invention concerne un dispositif d'alimentation d'au moins un dispositif de moulage en un mélange polymérisable d'au moins deux réactifs, ledit dispositif d'alimentation comprenant :

- un réservoir tampon adapté à recevoir ledit mélange polymérisable par une entrée dudit réservoir tampon,
- un circuit d'alimentation, bouclé avec ce réservoir tampon, pour amener le mélange polymérisable à une entrée dudit au moins un dispositif de moulage et comprenant, au-delà de ladite entrée du dispositif de moulage, une conduite de retour raccordée à l'entrée du réservoir tampon pour renvoyer une partie du mélange polymérisable dans le réservoir tampon, ledit réservoir tampon étant adapté à recevoir ledit mélange polymérisable de ladite conduite de retour, et

- une conduite de remplissage dudit réservoir tampon, raccordée à ladite entrée de ce réservoir tampon, distincte de la conduite de retour, ledit réservoir tampon étant également adapté à recevoir ledit mélange polymérisable ou au moins l'un desdits réactifs de ladite conduite de remplissage.

Ainsi, le réservoir tampon prévu dans l'invention permet, de façon avantageuse, de limiter les pertes en mélange polymérisable, par exemple lorsqu'il est nécessaire de purger ou nettoyer le dispositif d'alimentation.

Par ailleurs, le dispositif d'alimentation selon l'invention prévoit un circuit d'alimentation bouclé qui permet d'apporter une constance dans les caractéristiques du mélange polymérisable, notamment en termes de viscosité, élément clé permettant d'améliorer la qualité des verres polymérisés.

Grâce à l'invention, le mélange polymérisable réactif est toujours en mouvement, par exemple au moyen d'une pompe prévue pour fonctionner en débit continu ou constant, ce qui augmente avantageusement la stabilité de la viscosité du mélange polymérisable réactif.

D'autres caractéristiques non limitatives et avantageuses du dispositif d'alimentation conforme à l'invention sont les suivantes :

- le circuit d'alimentation comprend un moyen de régulation de la pression adapté à réguler la pression à l'entrée dudit au moins un dispositif de moulage, ledit moyen de régulation de la pression étant positionné sur la conduite de retour du circuit d'alimentation, en aval de ladite entrée du dispositif de moulage, et en amont de l'entrée du réservoir tampon ;
- le réservoir tampon comprend un moyen de contrôle du niveau de mélange polymérisable qu'il contient ;
- le circuit d'alimentation comprend une pompe pour alimenter ledit au moins un dispositif de moulage depuis le réservoir tampon, ladite pompe étant conçue pour fonctionner en débit continu, préférentiellement en débit constant ;

- ledit au moins un dispositif de moulage comporte un ou plusieurs moules, et un moyen d'injection adapté à chacun desdits moules qui peut comprendre à son entrée une vanne tout ou rien ;
- le dispositif de moulage est un dispositif de moulage de lentilles ophtalmiques.

L'invention propose également une ligne de moulage comprenant en communication fluidique, d'amont en aval dans le sens de l'écoulement fluidique, un dispositif de distribution d'au moins deux réactifs distincts précurseurs du mélange polymérisable, et un dispositif d'alimentation selon l'invention.

D'autres caractéristiques non limitatives et avantageuses de la ligne de moulage conforme à l'invention sont les suivantes :

- le dispositif de distribution desdits réactifs distincts comprend deux conduites de distribution distinctes pour acheminer lesdits réactifs distincts vers le dispositif d'alimentation, et comprend, sur chaque conduite de distribution, un moyen de régulation du débit pour acheminer lesdits réactifs distincts en quantité choisie dans ledit dispositif d'alimentation ;
- il est prévu, entre ledit dispositif de distribution et ledit dispositif d'alimentation, un dispositif de mélange desdits réactifs distincts alimentant ladite conduite de remplissage en mélange polymérisable ;
- le dispositif d'alimentation comporte une conduite de remplissage additionnelle, ledit dispositif de distribution alimentant directement chaque conduite de remplissage en l'un desdits réactifs du mélange polymérisable ;
- la ligne de moulage comprend, en outre, en amont dudit dispositif de distribution desdits réactifs distincts, un dispositif de stockage desdits réactifs distincts comportant un réservoir de stockage, chaque réservoir de stockage stockant l'un desdits réactifs distincts, et alimentant une conduite de distribution distincte comprise dans le dispositif de distribution pour acheminer ledit réactif distinct vers le dispositif d'alimentation ;
- le dispositif de stockage comprend en outre un réservoir d'attente distinct par réactif, pour assurer l'alimentation du dispositif d'alimentation en réactifs en relais des réservoirs de stockage initiaux ;
- la ligne de moulage comprend, en outre, au moins un dispositif de moulage connecté au circuit d'alimentation par une entrée dudit dispositif de moulage pour son alimentation en mélange polymérisable.

Ainsi, selon l'invention, la partie de la ligne de moulage située en amont du dispositif de mélange ou du dispositif d'alimentation n'est pas souillée par le mélange polymérisable. Cela permet de réduire notablement la quantité de solvant de nettoyage utilisée.

En outre, la quantité de mélange polymérisable issue du dispositif de mélange est ajustée au remplissage des moules, ce qui permet de réaliser des économies sur les quantités de réactifs utilisées ; une moindre quantité de réactifs est perdue dans les contenants lorsqu'un nettoyage est nécessaire.

L'invention propose, en outre, un procédé de pilotage d'une ligne de moulage selon l'invention, qui comprend une étape de contrôle du niveau de mélange polymérisable dans le réservoir tampon pour, si le niveau de mélange polymérisable dans le réservoir tampon atteint une valeur limite inférieure donnée, agir sur le dispositif de distribution afin d'augmenter l'introduction des réactifs ou du mélange polymérisable dans le réservoir tampon par la conduite de remplissage, et si le niveau de mélange polymérisable atteint une valeur limite supérieure donnée, agir sur le dispositif de distribution afin de ralentir voire arrêter l'introduction des réactifs ou du mélange polymérisable dans le réservoir tampon par la conduite de remplissage.

Une autre caractéristique non limitative et avantageuse du procédé de pilotage conforme à l'invention réside dans le fait que les valeurs limites inférieure et supérieure du niveau de mélange polymérisable dans le réservoir tampon sont déterminées en fonction du nombre de dispositifs de moulage, et des caractéristiques de ces dispositifs de moulage. En particulier, la valeur limite inférieure est telle qu'elle permet, sans que le réservoir tampon soit alimenté par la conduite de remplissage, d'alimenter les dispositifs de moulage pendant une durée permettant le remplacement des réservoirs de stockage par des réservoirs d'attente, préférentiellement pendant une durée comprise entre 10 minutes et 30 minutes.

Ainsi, à contrario des dispositifs connus de l'inventeur, il est possible de continuer l'alimentation des dispositifs de moulage durant les opérations nécessaires au remplacement du ou des réservoir(s) de stockage comportant les réactifs lorsque celui-ci ou ceux-ci sont vides.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 schématise une ligne de moulage selon l'invention; et
- la figure 2 est un organigramme représentant les étapes d'un procédé de pilotage de la ligne de moulage schématisée en figure 1.

Dans la suite de la description, les termes « amont » et « aval » seront utilisés dans le sens de l'écoulement fluidique, pour situer divers éléments les uns par rapport aux autres dans le dispositif d'alimentation, ou, plus généralement, dans la ligne de moulage.

De même, les termes « entrée » et « sortie » seront utilisés dans le sens de l'écoulement fluidique pour décrire le sens de montage des éléments compris dans le dispositif d'alimentation, ou plus généralement dans la ligne de moulage.

On entend par mélange polymérisable réactif un mélange de monomères, de pré-polymères et/ou de polymères, réagissant entre eux pour former un matériau polymère final. Ces réactifs sont des réactifs dits précurseurs du mélange polymérisable.

En particulier, dans notre cas, le mélange polymérisable réactif peut être un mélange de réactifs qui réagissent au moins partiellement entre eux par simple mise en contact, sans nécessiter une quelconque stimulation extérieure, telle qu'une action thermique, photonique, chimique ou mécanique.

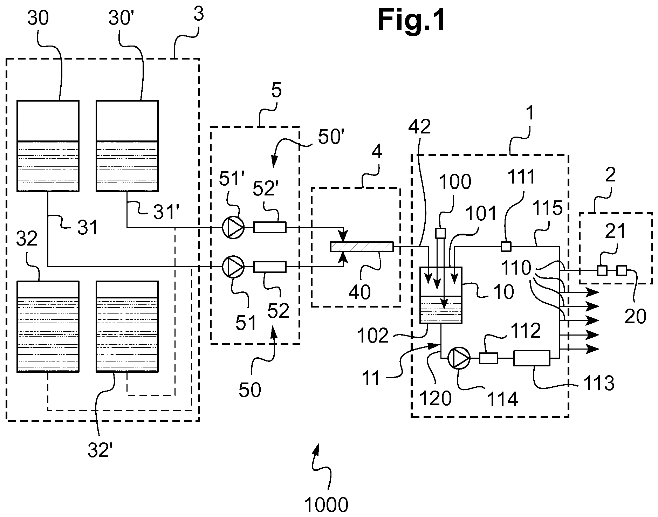

Sur la figure 1, on a représenté une ligne de moulage 1000 qui comprend, d'amont en aval, un dispositif de stockage 3 de réactifs, un dispositif de distribution 5 desdits réactifs, un dispositif de mélange 4 desdits réactifs, et un dispositif d'alimentation 1 de plusieurs dispositifs de moulage 2 comportant chacun un ou plusieurs moules 20 en un mélange polymérisable réactif.

Plus précisément, tous ces dispositifs sont en communication fluidique, de sorte lesdits réactifs sont acheminés depuis le dispositif de stockage 3 vers le dispositif de distribution 5, puis traversent le dispositif de mélange 4 avant d'être introduits dans le dispositif d'alimentation 1.

Dans un mode de réalisation préféré de l'invention, le dispositif de stockage 3 des réactifs comprend un réservoir de stockage 30, 30' distinct par réactif, alimentant chacun une conduite de distribution 31, 31' distincte en l'un desdits réactifs.

Chaque conduite de distribution 31, 31' est raccordée en aval au dispositif de mélange 4.

Le dispositif de distribution 5 des réactifs de la figure 1 comprend, sur le trajet de chaque conduite de distribution 31, 31', un moyen de régulation du débit 50, 50'.

Chaque moyen de régulation 50, 50' comprend, d'amont en aval, une pompe doseuse 51, 51' qui permet de doser précisément la quantité de réactif provenant des réservoirs de stockage 30, 30' à introduire dans le dispositif de mélange 4, et un capteur de mesure du débit 52, 52' qui mesure à chaque instant le débit réel de réactif dans la conduite de distribution 31, 31'.

La pompe doseuse 51, 51' permet de fixer un débit $D_5$, $D_5$' de réactif circulant dans chaque conduite de distribution 31, 31' depuis les réservoirs de stockage 30, 30' vers le dispositif de mélange 4.

Les pompes doseuses 51, 51' sont, par exemple, des pompes à disque excentrique. Alternativement ce sont des pompes péristaltiques.

Le dispositif de distribution 5 délivre ainsi de manière contrôlée à l'unique dispositif de mélange 4 les réactifs acheminés depuis les réservoirs de stockage 30, 30' du dispositif de stockage 3.

Le dispositif de mélange 4 comprend un mélangeur 40sur lequel sont raccordées en entrée chacune des conduites de distribution 31, 31' distinctes par lesquelles cheminent lesdits réactifs. Le mélange polymérisable réactif est obtenu en sortie de ce mélangeur 40, et est acheminé par une conduite de remplissage 42 vers le dispositif d'alimentation 1.

Ce mélangeur 40 est de préférence un mélangeur 40 statique qui est par exemple adapté pour le mélange de fluides en écoulement laminaire.

Ainsi, avantageusement, les réactifs issus respectivement des réservoirs de stockage 30, 30' n'entrent en contact que dans le dispositif de mélange 4.

Ce montage prévoyant une ligne d'alimentation distincte par réactif entre chaque réservoir de stockage 30, 30' et le mélangeur 40 est particulièrement adapté lorsque les réactifs stockés dans les réservoirs de stockage 30, 30' sont distincts et susceptibles de réagir l'un avec l'autre dans les conditions ambiantes.

En conséquence, comme seuls les dispositifs ayant été souillés par le mélange polymérisable réactif nécessitent un nettoyage fréquent, on réalise, grâce à l'invention, de notables économies en solvant de nettoyage. En effet, les réservoirs de stockage ne sont plus nécessairement nettoyés à chaque fois qu'ils sont vides car ils ne sont le lieu d'aucune réaction de polymérisation.

Le dispositif d'alimentation 1 comprend un réservoir tampon 10, un circuit d'alimentation 11, et ladite conduite de remplissage 42.

Plus précisément, en aval de la sortie du mélangeur 40, la conduite de remplissage 42 est reliée à une entrée 101 du réservoir tampon 10. Une sortie 102 du réservoir tampon 10 est quant à elle reliée à une conduite d'alimentation 120 du circuit d'alimentation 11.

Ainsi, le réservoir tampon 10 reçoit par son entrée 101 le mélange polymérisable provenant du mélangeur 40 du dispositif de mélange 4, et alimente à sa sortie 102 la conduite d'alimentation 120 du circuit d'alimentation 11.

La conduite d'alimentation 120 achemine ledit mélange polymérisable depuis le réservoir tampon 10 vers les dispositifs de moulage 2.

Comme le montre la figure 1, les dispositifs de moulage 2 sont connectés à la conduite d'alimentation 120 du circuit d'alimentation 11 par une entrée 110 distincte pour chacun desdits dispositifs de moulage 2.

La conduite d'alimentation 120 du circuit d'alimentation 11 se poursuit au-delà desdites entrées 110 des dispositifs de moulage 2 par une conduite de retour 115 pour se raccorder à l'entrée 101 du réservoir tampon 10.

Ainsi, la conduite d'alimentation 120 du circuit d'alimentation 11 prend sa source en sortie du réservoir tampon 10 et débouche, en aval, via la conduite de retour 115, à l'entrée 101 du réservoir tampon 10, de manière à former une boucle de retour dans ce réservoir tampon 10.

De cette manière, le circuit d'alimentation 11 permet de retourner au réservoir tampon 10 une certaine quantité de mélange polymérisable réactif, par la conduite de retour 115 qui est distincte de la conduite de remplissage 42.

La conduite de retour 115 et la conduite de remplissage 42 sont ici distinctes notamment en qu'elles sont alimentées, en amont, par deux sources distinctes de mélange polymérisable ou de réactifs.

La conduite de retour 115 est en outre distincte de la conduite de remplissage 42 en ce qu'elle comporte au moins une portion de conduite physiquement séparée de ladite conduite de remplissage 42.

Ainsi, avantageusement, grâce à la conduite de retour 115, le mélange polymérisable réactif en excès n'est pas perdu mais recyclé dans le réservoir tampon 10.

Dans l'exemple de réalisation décrit ici, le réservoir tampon 10 ne comporte qu'une seule entrée 101, sur laquelle sont directement raccordées la conduite de remplissage 42 et la conduite de retour 115. Autrement dit, l'entrée 101 du réservoir tampon 10 est une entrée commune aux deux conduites 42, 115 distinctes acheminant le mélange polymérisable dans le réservoir tampon 10.

En variante, on pourrait envisager que la conduite de retour et/ou la conduite de remplissage soient raccordées indirectement à l'entrée du réservoir tampon. Par exemple, on peut envisager que la conduite de retour soit indirectement raccordée à l'entrée du réservoir tampon en étant raccordée sur la conduite de remplissage, elle-même directement raccordée à l'entrée du réservoir tampon.

En variante encore, on pourrait prévoir que l'entrée du réservoir tampon comporte deux entrées distinctes : une sur laquelle est raccordée la conduite de remplissage, et une autre sur laquelle est raccordée la conduite de retour.

Les dispositifs de moulage 2 sont classiques pour un homme du métier et ne font pas l'objet de l'invention, ils ne seront donc pas détaillés ici.

Il convient néanmoins de préciser que ces dispositifs de moulage peuvent comporter un ou plusieurs moules 20 et des moyens d'injections 21 associés.

Les dispositifs de moulage 2 ne sont pas nécessairement identiques, mais leur fonction au sein de la ligne de moulage 1000 est similaire. Il en va de même pour les moules 20 qui ne sont pas nécessairement tous identiques, mais dont la fonction au sein du dispositif de moulage 2 est similaire.

Chaque moyen d'injection 21 peut comprendre à son entrée, une vanne (non représentée), dite vanne « tout ou rien », pouvant adopter soit une position ouverte autorisant le remplissage du moule 20 en mélange polymérisable, soit une position fermée empêchant le remplissage dudit moule 20 en mélange polymérisable.

Ainsi, chaque moule 20 peut adopter plusieurs états de fonctionnement : un état de remplissage au cours duquel la vanne est en position ouverte, et un état d'attente, ou un état de refroidissement, au cours desquels la vanne est en position fermée.

En outre, le circuit d'alimentation 11 peut comprendre, en aval de la sortie 102 du réservoir tampon 10 et en amont des entrées 110 des dispositifs de moulage 2, une pompe 114, un mélangeur 112, et un filtre 113.

De plus, on peut prévoir sur la conduite de retour 115 du circuit d'alimentation 11, en aval des entrées 110 des dispositifs de moulage 2, un moyen de régulation 111 de la pression, permettant de réguler la pression aux entrées 110 des dispositifs de moulage 2.

La pompe 114 permet de faire circuler le mélange polymérisable réactif dans la conduite d'alimentation 120, à un débit $D_1$ choisi.

Le débit $D_1$ peut par exemple être continu, c'est-à-dire tel que le mélange polymérisable est toujours en mouvement dans la conduite d'alimentation 120, ou peut même être constant.

De manière préférentielle, comme cela est représenté sur la figure 1, la pompe 114 est placée sur le trajet de la conduite d'alimentation 120, à la sortie du réservoir tampon 10.

Le mélangeur 112 permet d'homogénéiser le mélange polymérisable réactif provenant du dispositif de mélange 4 par la conduite de remplissage 42 avec le mélange polymérisable réactif ayant déjà circulé dans l'ensemble du circuit d'alimentation 11 et ayant été retourné au réservoir tampon 10 par la conduite de retour 115.

Le mélangeur 112 est par exemple un mélangeur statique du même type que le mélangeur 40 du dispositif de mélange 4.

Le filtre 113 permet de filtrer d'éventuelles particules solides. Ces particules solides, par exemple des additifs solides ayant été insuffisamment dissouts ou d'autres polluants solides, doivent être éliminées avant introduction du mélange polymérisable réactif dans les moules 20. En effet, une introduction de ces particules solides dans un des moules 20 formerait un point de diffusion dans la lentille optique finale obtenue, ce qui la rendrait inutilisable.

Préférentiellement, le filtre 113 est disposé sur le trajet de la conduite d'alimentation 120, en aval du mélangeur 112. Néanmoins, il pourrait être envisagé d'intervertir la position du mélangeur 112 et du filtre 113 sur la conduite d'alimentation 120.

Le régulateur de pression 111 permet de réguler la pression dans l'ensemble du circuit d'alimentation 11. En particulier, il permet un meilleur contrôle de la pression à l'entrée 110 de chacun des dispositifs de moulage 2.

Pour ce faire, le régulateur de pression 111 est positionné sur la conduite de retour 115 du circuit d'alimentation 11, en amont de l'entrée du réservoir tampon 10, et en aval de l'entrée 110 du dernier dispositif de moulage 2.

En conséquence, le régulateur de pression 111 procure un avantage supplémentaire à l'invention, en assurant une pression constante et identique à l'entrée de tous les dispositifs de moulage 2.

Le régulateur de pression 111 permet de maintenir la pression constante dans le circuit d'alimentation 11, en augmentant ou en diminuant le débit D de mélange polymérisable réactif réinjecté dans le réservoir tampon 10, la pression dans le circuit d'alimentation 11 pouvant varier en fonction notamment du nombre de moules 20 et de leur état de fonctionnement.

Le régulateur de pression 111 peut recevoir des informations sur la pression dans le circuit d'alimentation 11, soit directement, au moyen d'un capteur de pression dans ledit circuit d'alimentation 11, soit indirectement, en connaissant les états de fonctionnement des moules 20 ainsi que leurs caractéristiques, telles que leur consommation horaire en mélange polymérisable par exemple.

Dans le cas de l'obtention directe d'informations sur la pression, le régulateur de pression 111 augmente le débit D de mélange polymérisable réactif réinjecté dans le réservoir tampon 10 lorsque la pression dans la conduite de retour 115 augmente, et inversement, diminue le débit D lorsque la pression dans la conduite de retour 115 diminue.

Dans le cas de l'obtention indirecte d'informations sur la pression, le régulateur de pression 111 peut définir le débit D de mélange polymérisable réactif réinjecté dans le réservoir tampon 10 nécessaire pour maintenir la pression constante dans le circuit d'alimentation 11.

Un exemple de régulateur de pression 111 recevant directement des informations sur la pression dans la conduite de retour 115 et agissant sur le débit D de mélange polymérisable réactif réinjecté dans le réservoir tampon 10 est décrit ci-après. Un tel régulateur de pression fonctionne sur le principe d'une membrane reliée à un pointeau. Le pointeau a pour rôle de déplacer une partie de la membrane afin de réduire ou d'augmenter le diamètre de la conduite de retour 115 dans laquelle circule le mélange polymérisable. Afin de mesurer la pression dans la conduite de retour 115, une valeur de consigne de pression est donnée par un ressort, ou alternativement par une pression d'air, sur la membrane. Toute variation de pression dans la conduite de retour 115 entraîne des déplacements de la membrane qui sont transmis au pointeau. Cela permet de moduler le débit D de mélange polymérisable réactif réinjecté dans le réservoir tampon 10 et ainsi de maintenir une pression constante dans le circuit d'alimentation 11.

Par ailleurs, le circuit d'alimentation 11 bouclé sur le réservoir tampon 10 permet au mélange polymérisable réactif d'être en mouvement quasi continu. Ce mouvement permet de stabiliser la viscosité du mélange polymérisable réactif.

Du fait de la stabilité accrue de la viscosité du mélange polymérisable réactif, on peut réaliser de sérieuses économies d'énergie. En effet, l'ensemble de la ligne de moulage 1000 peut rester à température ambiante et ne nécessite plus d'être en partie réfrigérée, comme il est généralement prévu pour ralentir la cinétique de polymérisation des réactifs.

Dans une réalisation préférée, comme cela est représenté sur la figure 1, le réservoir tampon 10 comprend des moyens de contrôle 100 de la quantité de mélange polymérisable qu'il contient.

Ces moyens de contrôle 100 permettent de contrôler que le niveau de fluide dans le réservoir tampon 10 ne dépasse pas une valeur limite supérieure S prédéterminée, ou que le niveau de fluide ne descende pas en-dessous d'une valeur limite inférieure I prédéterminée.

Lesdites valeurs limites supérieure S et inférieure I dépendent du nombre de dispositifs de moulage 2 et des caractéristiques desdits dispositifs de moulage 2. Les caractéristiques des dispositifs de moulage 2 sont, par exemple, le nombre des moules 20 et leurs caractéristiques telles que leur consommation horaire en mélange polymérisable. Ainsi, le réservoir tampon 10 assure, à chaque instant, que les dispositifs de moulage 2 respectifs puissent être alimentés en mélange polymérisable réactif en quantité suffisante pour pouvoir remplir leurs moules 20 respectifs, tout en limitant la perte en mélange polymérisable réactif.

Dans une réalisation recommandée de l'invention, le dispositif de stockage 3 comporte en outre un réservoir d'attente 32, 32' distinct par réactifs.

Chaque réservoir d'attente 32, 32', est raccordé sur la conduite de distribution 31, 31' distincte correspondante, en amont du dispositif de distribution 5.

Avantageusement, ils peuvent être substitués aux réservoirs de stockage 30, 30' initiaux lorsque le niveau des réactifs dans ces réservoirs de stockage 30, 30' atteint un niveau bas déterminé, ou encore lorsque ces réservoirs de stockage 30, 30' sont vidés pour nettoyage ou maintenance.

Les réservoirs d'attente 32, 32' permettent ainsi d'assurer l'alimentation du dispositif de mélange 4 en réactifs en relais des réservoirs de stockage 30, 30'.

En outre, chaque réservoir d'attente 32, 32' distinct peut être muni d'une vanne (non représentée) qui autorise ou non l'écoulement du réactif dans ladite conduite de distribution 31, 31'.

Avantageusement, ces réservoirs d'attente 32, 32' permettent un remplacement rapide des réservoirs de stockage 30, 30' initiaux. En outre, le volume du réservoir tampon 10 nécessaire pour que les dispositifs de moulage 2 soient alimentés continuellement est plus faible.

On peut également envisager que la ligne de moulage nécessite plus de deux réactifs initiaux.

Dans ce cas, si certains réactifs peuvent être mélangés sans engendrer de réaction de polymérisation, on peut préparer deux mélanges distincts à introduire dans les réservoirs de stockage.

Selon une alternative de la ligne de moulage de la figure 1, on pourrait envisager que la ligne de moulage ne comprenne pas de dispositif de mélange.

En d'autres termes, on pourrait envisager que le dispositif de distribution soit directement raccordé au dispositif d'alimentation.

Il serait ainsi envisageable de prévoir deux conduites de remplissage que le dispositif de distribution alimenterait directement en l'un desdits réactifs du mélange polymérisable. Autrement dit, chaque conduite de remplissage raccorderait directement l'un desdits réservoirs de stockage au réservoir tampon, en passant par le dispositif de distribution comprenant les moyens de régulation du débit. Ces conduites de remplissage pourraient être raccordées à une entrée commune du réservoir tampon ou à des entrées distinctes du réservoir tampon.

On pourrait également envisager que le réservoir tampon intègre le dispositif de mélange.

Selon une autre variante de la ligne de moulage selon l'invention, on pourrait également prévoir autant de réservoirs de stockage distincts, de conduites de distribution et/ou de remplissage distinctes, et éventuellement de réservoirs d'attente distincts que de réactifs distincts. Le mélangeur du dispositif de mélange comprendrait alors autant d'entrées distinctes que de conduites distinctes qui y acheminent les réactifs. Et tous les réactifs seraient mélangés en quantité choisie dans ce dispositif de mélange afin d'obtenir le mélange polymérisable réactif souhaité en sortie dudit dispositif de mélange.

Selon une autre variante encore, la ligne de moulage pourrait ne comporter qu'un seul dispositif de moulage, lui-même pouvant comporter un ou plusieurs moules. Le circuit d'alimentation comprendrait alors une seule entrée vers ce dispositif de moulage.

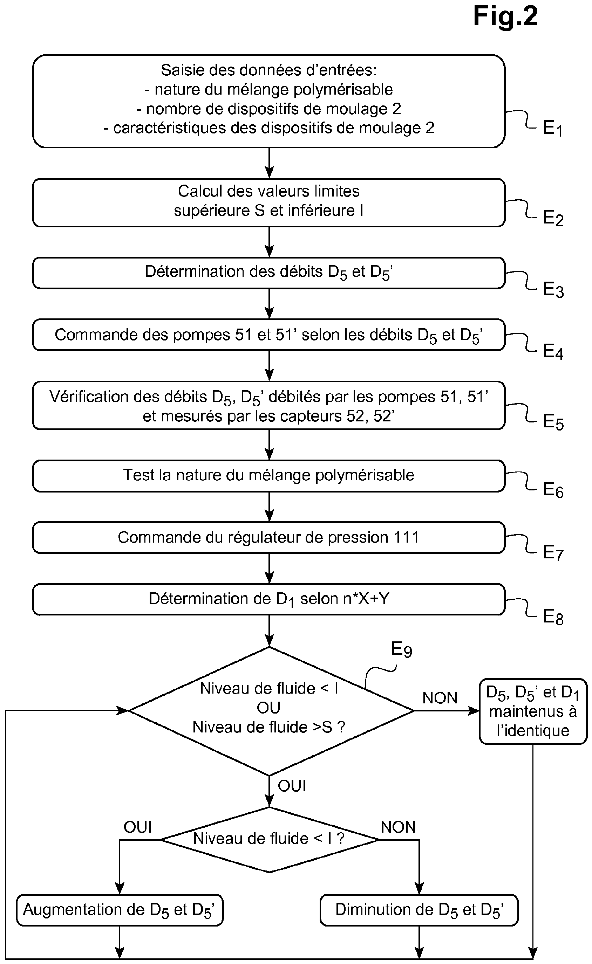

Sur la figure 2, on a représenté des étapes d'un procédé de pilotage de la ligne de moulage 1000.

Ce pilotage peut être réalisé au moyen d'une unité centrale programmable.

Dans une première étape E1, on saisit et on enregistre dans une mémoire de l'unité centrale la nature du mélange polymérisable réactif, le nombre de dispositifs de moulage 2, et les caractéristiques des dispositifs de moulage 2. Par exemple, certaines de ces caractéristiques peuvent être le nombre de moules 20 compris dans lesdits dispositifs de moulage 2 et la consommation horaire de ces moules 20.

Dans une deuxième étape E2, l'unité centrale calcule les valeurs limites supérieure S et inférieure I de mélange polymérisable réactif que le réservoir tampon 10 doit contenir pour alimenter, en quantité suffisante et avec le moins de perte possible, les dispositifs de moulage 2.

Ces valeurs limites supérieure S et inférieure I peuvent être calculées en fonction du nombre de dispositifs de moulage 2 et des caractéristiques des dispositifs de moulage 2.

En particulier, la valeur limite inférieure I doit permettre au réservoir tampon 10 d'alimenter les dispositifs de moulage 2 en autonomie, c'est-à-dire même lorsque le réservoir tampon 10 ne reçoit pas de mélange polymérisable réactif de la conduite de remplissage 42 en aval du dispositif de mélange 4, et ce pendant une durée nécessaire à l'éventuel remplacement, ou l'éventuel remplissage, des réservoirs de stockage 30, 30'. Cette durée peut être comprise entre 10 minutes et 30 minutes, et est plus généralement proche de 20 minutes.

Dans une troisième étape E3, telle que représentée sur la figure 2, l'unité centrale calcule le débit $D_5$, respectivement $D_5$', à imposer dans la conduite de distribution 31, respectivement 31', pour obtenir le mélange polymérisable réactif souhaité en sortie du dispositif de mélange 4.

Dans une quatrième étape E4, l'unité centrale pilote la pompe doseuse 51, respectivement 51', de manière qu'elle impose le débit $D_5$, respectivement $D_5$', dans la conduite de distribution 31, respectivement 31'.

Dans une cinquième étape E5, on teste que les pompes doseuses 51 et 51' débitent bien les débits $D_5$ et $D_5$' souhaités.

Ce test consiste à peser simultanément les deux réactifs issus respectivement des deux réservoirs de stockage 30,30' pendant un temps donné tout en mesurant, au moyen de capteurs de mesure de débit 52, 52', les débits respectifs des réactifs dans lesdites conduites de distribution 31, 31'.

De manière classique, tout au long du procédé, et en temps réel, les débits $D_5$, $D_5$' respectifs débités par les pompes doseuses 51, 51' respectives sont réajustés en fonction des débits mesurés par les capteurs de débit 52, 52' respectifs afin d'alimenter en permanence le dispositif de mélange 4 avec le ratio de réactifs permettant de former le mélange polymérisable réactif désiré. Les débits $D_5$ et $D_5$' admettent généralement une tolérance maximale de $\pm$ 1% pour garantir les spécifications chimiques du mélange polymérisable.

Dans une sixième étape E6, on teste si le mélange polymérisable obtenu en sortie du dispositif de mélange 4 correspond bien au mélange polymérisable voulu.

Ce test consiste à prélever un échantillon de mélange polymérisable à la sortie du mélangeur 40 et à le tester à l'aide, par exemple, de méthodes optiques.

Ces méthodes optiques sont classiques pour un homme du métier et ne constituent pas le coeur de l'invention donc elles ne seront pas détaillées ici.

Dans une septième étape E7, on pilote le régulateur de pression 111 de manière à imposer une pression constante et identique à l'entrée 110 de chacun des dispositifs de moulage 2.

Dans une huitième étape E8, on détermine le débit $D_1$ à imposer dans le circuit d'alimentation 11, et notamment dans la conduite d'alimentation 120 pour que les dispositifs de moulage 2 soient alimentés de manière satisfaisante, en fonction d'une cadence souhaitée et/ou d'une consommation en mélange polymérisable de ces dispositifs de moulage 2.

Ainsi, si un dispositif de moulage 2a doit alimenter $n_a$ moules 20a de sorte que chacun de ces moules 20a consomme un débit Xa (kg/heure) de mélange polymérisable réactif, le débit $D_1$ dans la conduite d'alimentation 120 du circuit d'alimentation 11 doit être au moins égal à :

$D_1 = n_a$*Xa, c'est-à-dire le débit nécessaire à l'alimentation stricte des moules 20a. Autrement dit le débit $D_1$ doit être au moins égal au produit du nombre $n_a$ de moules 20a par le débit Xa consommé par chacun de ces moules 20a.

De même, si, en plus d'alimenter le dispositif de moulage 2a, le circuit d'alimentation 11 doit alimenter un dispositif de moulage 2b additionnel, comprenant $n_b$ moules 20b de sorte que chacun de ces moules 20b consomme un débit Xb (kg/heure) de mélange polymérisable réactif, le débit $D_1$ dans le circuit d'alimentation 11 doit être au moins égal à :

$D_1 = n_a$*Xa + $n_b$*Xb, à savoir le débit nécessaire à l'alimentation stricte de l'ensemble des moules 20a et des moules 20b.

Ce débit $D_1$ est volontairement déterminé de telle sorte qu'il soit supérieur au débit nécessaire à l'alimentation stricte des moules 20, soit :

$D_i = \Sigma_i(n_i$*Xi) + Y, où $n_i$ est le nombre de moules 20i compris dans un dispositif de moulage 2i, chacun de ces moules 20i recevant un débit Xi de mélange polymérisable réactif, et Y un débit de sécurité.

Par conséquent, si tous les moules 20 de l'ensemble des dispositifs de moulage 2 sont alimentés simultanément, le débit de sécurité Y de mélange polymérisable réactif correspond au débit D de mélange polymérisable réactif retourné au réservoir tampon 10, c'est-à-dire au débit de fluide dans la conduite de retour 115.

De manière générale, le débit D de mélange polymérisable réactif retourné au réservoir tampon 10 dépend essentiellement du nombre de moules 20 en fonctionnement dans chaque dispositif de moulage 2, et plus particulièrement du nombre de moules 20 qui sont simultanément en état de remplissage.

Par exemple, si en cours de production, le dispositif de moulage 2a alimente $n'_a$ moules 20a au lieu des $n_a$ moules 20a initiaux, le débit D de mélange polymérisable réactif retourné au réservoir tampon 10, sera :

$$D = Y + (n_a - n'_a) * Xa.$$

En général, le débit de sécurité Y est choisi au moins égal au débit X que reçoit un moule 20, mais il peut être choisi comme étant équivalent à 10% ou 20% ou même 50% du débit $D_1$.

Dans une neuvième étape E9, telle que présentée sur la figure 2, on détermine si le niveau de fluide dans le réservoir tampon 10 est compris entre les valeurs limites inférieure I et supérieure S calculées à l'étape E2, inférieur à la valeur limite inférieure I, ou supérieur à la valeur limite supérieure S.

Si le niveau de fluide dans le réservoir tampon 10 est supérieur ou égal à la valeur limite inférieure I tout en étant inférieur ou égal à la valeur limite supérieure S, on maintient les débits $D_5$ et $D_5'$ dans les conduites de distribution 31, 31' ainsi que le débit $D_1$ dans la conduite d'alimentation 120 du circuit d'alimentation 11 tels que dans l'étape précédemment effectuée dans le procédé de pilotage.

Si le niveau de fluide dans le réservoir tampon 10 est inférieur à la valeur limite inférieure I, on agit de façon proportionnelle sur les deux pompes doseuses 51 et 51' pour augmenter les débits $D_5$ et $D_5'$ des réactifs dans les conduites de distribution 31, 31', sans changer le ratio des réactifs au sein du mélangeur 40.

De cette manière, le mélange polymérisable réactif circulant dans la conduite de remplissage 42 en sortie du mélangeur 40 est toujours le même, mais une plus grande quantité de ce mélange polymérisable réactif alimente le réservoir tampon 10.

En effet, en considérant que ledit réservoir tampon 10 se vide toujours avec le même débit, augmenter les débits $D_5$ et $D_5'$ dans les conduites de distribution 31 et 31' permettra d'augmenter la quantité de mélange polymérisable réactif dans le réservoir tampon 10.

Si nécessaire, on peut également diminuer le débit $D_1$ dans la conduite d'alimentation du circuit d'alimentation 11 et/ou ralentir la cadence de remplissage des moules 20.

Si le niveau de fluide dans le réservoir tampon 10 est supérieur à la valeur limite supérieure S, on agit de façon proportionnelle sur les deux pompes doseuses 51 et 51' pour diminuer les débits $D_5$ et $D_5'$ dans les conduites de distribution 31, 31', sans changer le ratio des réactifs au sein du mélangeur 40.

Ainsi, le mélange polymérisable réactif en sortie du mélangeur 40 est toujours le même, mais une moindre quantité de ce mélange polymérisable réactif alimente le réservoir tampon 10 via la conduite de remplissage 42.

En effet, en considérant que ledit réservoir tampon 10 se vide toujours avec le même débit, diminuer les débits $D_5$ et $D_5'$ dans les conduites de distribution 31,31' permettra de diminuer la quantité de mélange polymérisable réactif dans le réservoir tampon 10.

Si nécessaire, on peut arrêter les débits $D_5$ et $D_5'$ dans les conduites de distribution 31,31'.

Le procédé de pilotage reprend en boucle à partir de la neuvième étape E9.

Le procédé peut reprendre en première étape E1 lorsque les données d'entrée sont modifiées, par exemple lorsque le nombre de dispositifs de moulage 2 est modifié.

Le procédé peut s'arrêter lorsque la machine s'arrête.

L'exemple détaillé qui suit décrit un mode d'utilisation de la ligne de moulage 1000.

Dans cet exemple, un mélange distinct est introduit dans chacun des réservoirs de stockage 30, 30'.

Le premier mélange comprend un monomère A, un démoulant et un absorbeur UV. Le monomère A peut, par exemple, être un diisocyanate.

Le second mélange comprend un autre monomère B, différent du monomère A, un agent bleuissant et un catalyseur. Le monomère B peut, par exemple, être un dithiol.

Afin de se rapprocher de la description ci-dessus, les premier et second mélanges seront appelés premier et second réactifs.

Les premier et second réactifs sont acheminés par le dispositif de distribution 5 dans le mélangeur 40 du dispositif de mélange 4, au moyen de pompes à disque excentrique 51, 51', et les débits sont mesurés par des débitmètres 52, 52'.

Le mélangeur 40 est de préférence un mélangeur statique, par exemple un mélangeur de la société Nordson®, série "IN-Line Mixer", ou un mélangeur "X-Grid Static Mixer" proposé par la société stamixco® ou encore un mélangeur du modèle MikroMakro de la société Fluitec ®, ou un mélangeur des séries 246, 250, 275, distribuées par la société Koflo®, ou un mélangeur des séries S, 100 ou 150 de la société stratiflo.

Dans ce cas particulier, à la sortie du mélangeur 40, on obtient un mélange polymérisable réactif à base de polythiouréthane. Ce mélange convient bien à la réalisation de lentilles optiques, et notamment de lentilles ophtalmiques, car il s'agit d'un matériau transparent.

Ce même mélange n'est habituellement considéré comme utilisable que pendant trois heures, ou au mieux cinq heures après que les réactifs ont été mélangés. Au-delà de cette durée, le mélange ayant commencé à réagir sur lui-même atteint un degré de solidification tel qu'il devient inutilisable. Notamment, ledit mélange ne peut plus être injecté dans les moules 20 car sa viscosité devient trop importante pour donner lieu à un écoulement fluidique, et il contient de nombreux éléments pré-polymérisés qui peuvent créer des défauts optiques dans une lentille qui serait fabriquée avec ce matériau.

La réaction de polymérisation entre les deux réactifs se produit dès la mise en contact des réactifs, sans nécessiter aucune stimulation extérieure, telle qu'une action thermique, photonique, chimique ou mécanique.

Dans cet exemple, les dispositifs de moulage 2 comprennent des machines à remplir 21 qui injectent le mélange polymérisable dans les moules 20 qui peuvent être de type varié. Ce processus d'injection est contrôlé par une pompe ou alternativement par une vanne. Les machines à remplir de l'exemple permettent de produire 300 lentilles optiques en une heure.

Ces machines à remplir 21 alimentent des moules 20, appelés aussi assemblages, pour le moulage de lentilles concaves ou convexes.

Chacune de ces machines à remplir 21 requiert une alimentation en mélange polymérisable réactif à base de polythiouréthane de X = 18kg/heure.

Le circuit d'alimentation 11 comprend jusqu'à 6 entrées 110 qui alimente chacune un dispositif de moulage 2 tel qu'une machine de remplissage automatique, semi-automatique ou manuelle, qui comprend n = 1 ou 2 (ou plus) machines à remplir 21, pouvant être appelées autrement "têtes de remplissage", soit autant de machines à remplir 21 que de moules 20 à remplir.

On peut prévoir que le débit de sécurité Y de mélange polymérisable réactif à base de polythiouréthane soit de 18kg/heure.

Ainsi, le débit D1 du circuit d'alimentation 11 est fixé à

$$D1 = n*X + Y = 6*18 + 18 = 126 \text{ kg/heure.}$$

Si, en cours de production, seules une des deux machines à remplir 21 est en fonctionnement, le débit D de mélange polymérisable réactif à base de polythiouréthane retournant au réservoir tampon 10 sera :

$$D = (1*18 + 18) = 36 \text{ kg/heure.}$$

## Revendications

**1.** Dispositif d'alimentation (1) d'au moins un dispositif de moulage (2) en un mélange polymérisable d'au moins deux réactifs, ledit dispositif d'alimentation (1) comprenant :

    - un réservoir tampon (10) adapté à recevoir ledit mélange polymérisable par une entrée (101) dudit réservoir tampon (10),
    - un circuit d'alimentation (11), bouclé avec ce réservoir tampon (10), pour amener le mélange polymérisable à une entrée (110) dudit au moins un dispositif de moulage (2) et comprenant, au-delà de ladite entrée (110) du dispositif de moulage (2), une conduite de retour (115) raccordée à l'entrée (101) du réservoir tampon (10) pour renvoyer une partie du mélange polymérisable dans le réservoir tampon (10), ledit réservoir tampon (10) étant adapté à recevoir ledit mélange polymérisable de ladite conduite de retour (115), et
    - une conduite de remplissage (42) dudit réservoir tampon (10), raccordée à ladite entrée (101) de ce réservoir tampon (10), distincte de la conduite de retour (115), ledit réservoir tampon (10) étant adapté à recevoir ledit mélange polymérisable ou au moins l'un desdits réactifs de ladite conduite de remplissage (42).

**2.** Dispositif d'alimentation (1) selon la revendication 1, dans lequel le circuit d'alimentation (11) comprend un moyen de régulation de la pression (111) adapté à réguler la pression à l'entrée (110) dudit au moins un dispositif de moulage (2), ledit moyen de régulation de la pression (111) étant positionné sur la conduite de retour (115) du circuit d'alimentation (11), en aval de ladite entrée (110) du dispositif de moulage (2), et en amont de l'entrée (101) du réservoir tampon (10).

3. Dispositif d'alimentation (1) selon l'une quelconque des revendications 1 et 2, dans lequel le réservoir tampon (10) comprend un moyen de contrôle (100) du niveau de mélange polymérisable qu'il contient.

4. Dispositif d'alimentation (1) selon l'une quelconque des revendications 1 à 3, dans lequel le circuit d'alimentation (11) comprend une pompe (114) pour alimenter ledit au moins un dispositif de moulage (2) depuis le réservoir tampon (10), ladite pompe (114) étant conçue pour fonctionner en débit continu, préférentiellement en débit constant.

5. Dispositif d'alimentation (1) selon l'une quelconque des revendications 1 à 4, dans lequel ledit au moins un dispositif de moulage (2) comporte un ou plusieurs moules (20), et un moyen d'injection (21) adapté à chacun desdits moules (20) qui peut comprendre à son entrée une vanne tout ou rien.

6. Dispositif d'alimentation (1) selon l'une quelconque des revendications 1 à 5, dans lequel le dispositif de moulage (2) est un dispositif de moulage de lentilles ophtalmiques.

7. Ligne de moulage (1000) comprenant en communication fluidique d'amont en aval dans le sens de l'écoulement fluidique :

- un dispositif de distribution (5) d'au moins deux réactifs distincts précurseurs du mélange polymérisable, et
- un dispositif d'alimentation (1) selon l'une quelconque des revendications 1 à 6.

8. Ligne de moulage (1000) selon la revendication 7, dans laquelle le dispositif de distribution (5) desdits réactifs distincts comprend deux conduites de distribution (31, 31') distinctes pour acheminer lesdits réactifs distincts vers le dispositif d'alimentation (1), et comprend, sur chaque conduite de distribution (31, 31'), un moyen de régulation du débit (50, 50') pour acheminer lesdits réactifs distincts en quantité choisie dans ledit dispositif d'alimentation (1).

9. Ligne de moulage (1000) selon l'une des revendications 7 et 8, dans laquelle il est prévu, entre ledit dispositif de distribution (5) et ledit dispositif d'alimentation (1), un dispositif de mélange (4) desdits réactifs distincts alimentant ladite conduite de remplissage (42) en mélange polymérisable.

10. Ligne de moulage selon l'une des revendications 7 et 8, dans laquelle le dispositif d'alimentation comporte une conduite de remplissage additionnelle, ledit dispositif de distribution alimentant directement chaque conduite de remplissage en l'un desdits réactifs du mélange polymérisable.

11. Ligne de moulage (1000) selon l'une quelconque des revendications 7 à 10, qui comprend, en outre, en amont dudit dispositif de distribution (5) desdits réactifs distincts, un dispositif de stockage (3) desdits réactifs distincts comportant un réservoir de stockage (30, 30'), chaque réservoir de stockage (30, 30') stockant l'un desdits réactifs distincts, et alimentant une conduite de distribution (31, 31') distincte comprise dans le dispositif de distribution (5) pour acheminer ledit réactif distinct vers le dispositif d'alimentation (1).

12. Ligne de moulage (1000) selon la revendication 11, dans laquelle le dispositif de stockage (3) comprend en outre un réservoir d'attente (32, 32') distinct par réactif, pour assurer l'alimentation du dispositif de distribution (5) en réactifs en relais des réservoirs de stockage (30, 30') initiaux.

13. Ligne de moulage (1000) selon l'une quelconque des revendications 7 à 12, qui comprend, en outre, au moins un dispositif de moulage (2) connecté au circuit d'alimentation (11) par une entrée (110) dudit dispositif de moulage (2) pour son alimentation en mélange polymérisable.

14. Procédé de pilotage d'une ligne de moulage (1000) selon l'une quelconque des revendications 9 à 13, **caractérisé en ce qu'**il comprend une étape de contrôle du niveau de mélange polymérisable dans le réservoir tampon (10) pour :

a) si le niveau de mélange polymérisable dans le réservoir tampon (10) atteint une valeur limite inférieure (I) donnée, agir sur le dispositif de distribution (5) afin d'augmenter l'introduction des réactifs ou du mélange polymérisable dans le réservoir tampon (10) par la conduite de remplissage (42), et
b) si le niveau de mélange polymérisable atteint une valeur limite supérieure (S) donnée, agir sur le dispositif de distribution (5) afin de ralentir voire arrêter l'introduction des réactifs ou du mélange polymérisable dans le réservoir tampon (10) par la conduite de remplissage (42).

**15.** Procédé de pilotage d'une ligne de moulage (1000) selon la revendication 14, dans lequel les valeurs limites inférieure (I) et supérieure (S) du niveau de mélange polymérisable dans le réservoir tampon (10) sont déterminées en fonction du nombre de dispositifs de moulage (2), et des caractéristiques de ces dispositifs de moulage (2).

**16.** Procédé de pilotage d'une ligne de moulage selon l'une des revendications 14 et 15, dans lequel la valeur limite inférieure (I) est telle qu'elle permet, sans que le réservoir tampon (10) soit alimenté par la conduite de remplissage (42), d'alimenter les dispositifs de moulage (2) pendant une durée permettant le remplacement des réservoirs de stockage (30, 30') par des réservoirs d'attente (32, 32'), préférentiellement pendant une durée comprise entre 10 minutes et 30 minutes.

**Patentansprüche**

**1.** Zuführvorrichtung (1) zum Zuführen eines polymerisierbaren Gemisches aus mindestens zwei Reagenzien zu einer Formvorrichtung (2), wobei die Zuführvorrichtung (1) umfasst:

- einen Pufferbehälter (10), der geeignet ist, das polymerisierbare Gemisch durch einen Einlass (101) des Pufferbehälters (10) aufzunehmen,
- einen Zuführkreis (11), der mit diesem Pufferbehälter (10) im Ring verbunden ist, um das polymerisierbare Gemisch zu einem Einlass (110) der mindestens einen Formvorrichtung (2) zu führen, und, jenseits des Einlasses (110) der Formvorrichtung (2), eine Rückleitung (115) umfasst, die an den Einlass (101) des Pufferbehälters (10) angeschlossen ist, um einen Teil des polymerisierbaren Gemisches in den Pufferbehälter (10) zurückzuleiten, wobei der Pufferbehälter (10) geeignet ist, das polymerisierbare Gemisch der Rückleitung (115) aufzunehmen, und
- eine Füllleitung (42) zum Füllen des Pufferbehälters (10), die an den Einlass (101) dieses Pufferbehälters (10) angeschlossen ist und von der Rückleitung (115) verschieden ist, wobei der Pufferbehälter (10) geeignet ist, das polymerisierbare Gemisch oder mindestens eines der Reagenzien der Füllleitung (42) aufzunehmen.

**2.** Zuführvorrichtung (1) nach Anspruch 1, bei welcher der Zuführkreis (11) ein Druckregelungsmittel (111) umfasst, das geeignet ist, den Druck am Einlass (110) der mindestens einen Formvorrichtung (2) zu regeln, wobei das Druckregelungsmittel (111) an der Rückleitung (115) des Zuführkreises (11), stromab des Einlasses (110) der Formvorrichtung (2) und stromauf des Einlasses (101) des Pufferbehälters (10), angeordnet ist.

**3.** Zuführvorrichtung (1) nach einem der Ansprüche 1 und 2, bei welcher der Pufferbehälter (10) ein Überwachungsmittel (100) zum Überwachen des Füllstands des polymerisierbaren Gemisches, das er enthält, umfasst.

**4.** Zuführvorrichtung (1) nach einem der Ansprüche 1 bis 3, bei welcher der Zuführkreis (11) eine Pumpe (114) umfasst, um die mindestens eine Formvorrichtung (2) von dem Pufferbehälter (10) aus zu versorgen, wobei die Pumpe (114) dazu ausgelegt ist, mit kontinuierlichem Volumenstrom, bevorzugt mit konstantem Volumenstrom, zu arbeiten.

**5.** Zuführvorrichtung (1) nach einem der Ansprüche 1 bis 4, bei der die mindestens eine Formvorrichtung (2) eine oder mehrere Formen (20) beinhaltet und ein für jede der Formen (20) geeignetes Einspritzmittel (21), das an seinem Einlass ein Auf/Zu-Ventil umfassen kann.

**6.** Zuführvorrichtung (1) nach einem der Ansprüche 1 bis 5, bei der die Formvorrichtung (2) eine Vorrichtung zum Formen von ophthalmischen Linsen ist.

**7.** Formanlage (1000), umfassend in Fluidverbindung von stromauf nach stromab in Richtung der Fluidströmung:

- eine Ausgabevorrichtung (5) zum Ausgeben von mindestens zwei einzelne Reagenzien, die Vorläufer des polymerisierbaren Gemisches sind, und
- eine Zuführvorrichtung (1) nach einem der Ansprüche 1 bis 6.

**8.** Formanlage (1000) nach Anspruch 7, bei der die Ausgabevorrichtung (5) zum Ausgeben der einzelnen Reagenzien zwei einzelne Ausgabeleitungen (31, 31') umfasst, um die einzelnen Reagenzien zu der Zuführvorrichtung (1) zu befördern, und an jeder Ausgabeleitung (31, 31') ein Volumenstromregelungsmittel (50, 50') umfasst, um die einzelnen Reagenzien in gewählter Menge in die Zuführvorrichtung (1) zu befördern.

9. Formanlage (1000) nach einem der Ansprüche 7 und 8, bei der zwischen der Ausgabevorrichtung (5) und der Zuführvorrichtung (1) eine Mischvorrichtung (4) zum Mischen der einzelnen Reagenzien vorgesehen ist, welche die Füllleitung (42) mit polymerisierbarem Gemisch versorgt.

10. Formanlage nach einem der Ansprüche 7 und 8, bei der die Zuführvorrichtung eine zusätzliche Füllleitung umfasst, wobei die Ausgabevorrichtung jede Füllleitung direkt mit einem der Reagenzien des polymerisierbaren Gemisches versorgt.

11. Formanlage (1000) nach einem der Ansprüche 7 bis 10, die ferner, stromauf der Ausgabevorrichtung (5) zum Ausgeben der einzelnen Reagenzien, eine Lagervorrichtung (3) zum Lagern der einzelnen Reagenzien umfasst, die einen Lagerbehälter (30, 30') beinhaltet, wobei jeder Lagerbehälter (30, 30') eines der einzelnen Reagenzien lagert und eine einzelne Ausgabeleitung (31, 31') versorgt, die in der Ausgabevorrichtung (5) inbegriffen ist, um das einzelne Reagenz der Zuführvorrichtung (1) zuzuführen.

12. Formanlage (1000) nach Anspruch 11, bei der die Lagervorrichtung (3) ferner einen einzelnen Standby-Behälter (32, 32') je Reagenz umfasst, um die Zuführung der Reagenzien zu der Ausgabevorrichtung (5) anstelle der ursprünglichen Lagerbehälter (30, 30') zu gewährleisten.

13. Formanlage (1000) nach einem der Ansprüche 7 bis 12, die ferner mindestens eine Formvorrichtung (2) umfasst, die mit dem Zuführkreis (11) über einen Einlass (110) der Formvorrichtung (2) verbunden ist, um ihr polymerisierbares Gemisch zuzuführen.

14. Verfahren zur Steuerung einer Formanlage (1000) nach einem der Ansprüche 9 bis 13, **dadurch gekennzeichnet, dass** sie einen Schritt des Überwachens des Füllstands des polymerisierbaren Gemisches in dem Pufferbehälter (10) umfasst, um:

a) wenn der Füllstand des polymerisierbaren Gemisches in dem Pufferbehälter (10) einen gegebenen unteren Grenzwert (I) erreicht, auf die Ausgabevorrichtung (5) einzuwirken, um die Einleitung der Reagenzien oder des polymerisierbaren Gemisches in den Pufferbehälter (10) durch die Füllleitung (42) zu erhöhen, und
b) wenn der Füllstand des polymerisierbaren Gemisches einen gegebenen oberen Grenzwert (S) erreicht, auf die Ausgabevorrichtung (5) einzuwirken, um die Einleitung der Reagenzien oder des polymerisierbaren Gemisches in den Pufferbehälter (10) durch die Füllleitung (42) zu verlangsamen oder sogar zu stoppen.

15. Verfahren zur Steuerung einer Formanlage (1000) nach Anspruch 14, bei dem der untere (I) und der obere (S) Grenzwert des Füllstands des polymerisierbaren Gemisches in dem Pufferbehälter (10) in Abhängigkeit von der Anzahl der Formvorrichtungen (2) und von den Merkmalen dieser Formvorrichtungen (2) bestimmt werden.

16. Verfahren zur Steuerung einer Formanlage nach einem der Ansprüche 14 und 15, bei dem der untere Grenzwert (I) dergestalt ist, dass er es ermöglicht, ohne dass der Pufferbehälter (10) über die Füllleitung (42) versorgt wird, die Formvorrichtungen (2) während einer Dauer zu versorgen, die das Ersetzen der Lagerbehälter (30, 30') durch Standby-Behälter (32, 32') ermöglicht, bevorzugt während einer Dauer zwischen 10 Minuten und 30 Minuten.

**Claims**

1. Supply device (1) for supplying at least one molding device (2) with a polymerizable mixture of at least two reactants, said supply device (1) comprising:

- a buffer tank (10) designed to receive said polymerizable mixture through an inlet (101) of said buffer tank (10),
- a supply circuit (11), looped with this buffer tank (10), for feeding the polymerizable mixture to an inlet (110) of said at least one molding device (2) and comprising, beyond said inlet (110) of the molding device (2), a return line (115) connected to the inlet (101) of the buffer tank (10) in order to return some of the polymerizable mixture into the buffer tank (10), said buffer tank (10) being designed to receive said polymerizable mixture from said return line (115), and
- a filling line (42) for filling said buffer tank (10), said filling line (42) being connected to said inlet (101) of this buffer tank (10), being separate from the return line (115), said buffer tank (10) being designed to receive said polymerizable mixture or at least one of said reactants from said filling line (42).

**2.** Supply device (1) according to Claim 1, wherein the supply circuit (11) comprises a pressure regulating means (111) that is designed to regulate the pressure at the inlet (110) of said at least one molding device (2), said pressure regulating means (111) being positioned on the return line (115) of the supply circuit (11), downstream of said inlet (110) of the molding device (2) and upstream of the inlet (101) of the buffer tank (10).

**3.** Supply device (1) according to either one of Claims 1 and 2, wherein the buffer tank (10) comprises a checking means (100) for checking the level of polymerizable mixture that it contains.

**4.** Supply device (1) according to any one of Claims 1 to 3, wherein the supply circuit (11) comprises a pump (114) for supplying said at least one molding device (2) from the buffer tank (10), said pump (114) being designed to operate with a continuous flow rate, preferably a constant flow rate.

**5.** Supply device (1) according to any one of Claims 1 to 4, wherein said at least one molding device (2) has one or more molds (20), and an injection means (21) suited to each of said molds (20), which may comprise an on/off valve at its inlet.

**6.** Supply device (1) according to any one of Claims 1 to 5, wherein the molding device (2) is a device for molding ophthalmic lenses.

**7.** Molding line (1000) comprising, in fluidic communication from upstream to downstream in the direction of fluid flow:

  - a dispensing device (5) for dispensing at least two different precursor reactants of the polymerizable mixture, and
  - a supply device (1) according to any one of Claims 1 to 6.

**8.** Molding line (1000) according to Claim 7, wherein the dispensing device (5) for dispensing said different reactants comprises two separate dispensing lines (31, 31') for conducting said different reactants to the supply device (1), and comprises, on each dispensing line (31, 31'), a flow rate regulating means (50, 50') for conducting said different reactants in selected quantities into said supply device (1).

**9.** Molding line (1000) according to either of Claims 7 and 8, wherein, between said dispensing device (5) and said supply device (1), a mixing device (4) for mixing said different reactants supplying said filling line (42) with polymerizable mixture is provided.

**10.** Molding line according to either of Claims 7 and 8, wherein the supply device has an additional filling line, said dispensing device directly supplying each filling line with one of said reactants of the polymerizable mixture.

**11.** Molding line (1000) according to any one of Claims 7 to 10, which also comprises, upstream of said dispensing device (5) for dispensing said different reactants, a storage device (3) for storing said different reactants, having a storage tank (30, 30'), each storage tank (30, 30') storing one of said different reactants, and supplying a separate dispensing line (31, 31') contained in the dispensing device (5) for conducting said different reactant to the supply device (1) .

**12.** Molding line (1000) according to Claim 11, wherein the storage device (3) also comprises a separate standby tank (32, 32') per reactant, in order to ensure that the dispensing device (5) is supplied with reactants as a backup to the initial storage tanks (30, 30').

**13.** Molding line (1000) according to any one of Claims 7 to 12, which also comprises at least one molding device (2) connected to the supply circuit (11) via an inlet (110) of said molding device (2) in order to be supplied with polymerizable mixture.

**14.** Method for controlling a molding line (1000) according to any one of Claims 9 to 13, **characterized in that** it comprises a step of checking the level of polymerizable mixture in the buffer tank (10) in order:

  a) if the level of polymerizable mixture in the buffer tank (10) reaches a given lower limit value (I), to act on the dispensing device (5) so as to increase the introduction of the reactants or of the polymerizable mixture into the buffer tank (10) through the filling line (42), and
  b) if the level of polymerizable mixture reaches a given upper limit value (S), to act on the dispensing device (5) so as to slow down or even stop the introduction of the reactants or of the polymerizable mixture into the buffer tank (10) through the filling line (42).

15. Method for controlling a molding line (1000) according to Claim 14, wherein the lower limit value (I) and upper limit value (S) of the level of polymerizable mixture in the buffer tank (10) are determined as a function of the number of molding devices (2) and of the characteristics of these molding devices (2).

16. Method for controlling a molding line according to either of Claims 14 and 15, wherein the lower limit value (I) is such that, without the buffer tank (10) being supplied by the filling line (42), it allows the molding devices (2) to be supplied for a period of time in which the storage tanks (30, 30') can be replaced by standby tanks (32, 32'), preferably for a period of time of between 10 minutes and 30 minutes.

# Fig.1

# Fig.2

Saisie des données d'entrées:
- nature du mélange polymérisable
- nombre de dispositifs de moulage 2
- caractéristiques des dispositifs de moulage 2

$E_1$

Calcul des valeurs limites
supérieure S et inférieure I

$E_2$

Détermination des débits $D_5$ et $D_5'$

$E_3$

Commande des pompes 51 et 51' selon les débits $D_5$ et $D_5'$

$E_4$

Vérification des débits $D_5$, $D_5'$ débités par les pompes 51, 51'
et mesurés par les capteurs 52, 52'

$E_5$

Test la nature du mélange polymérisable

$E_6$

Commande du régulateur de pression 111

$E_7$

Détermination de $D_1$ selon n*X+Y

$E_8$

$E_9$

Niveau de fluide < I
OU
Niveau de fluide >S ?

NON

$D_5$, $D_5'$ et $D_1$
maintenus à
l'identique

OUI

OUI  Niveau de fluide < I ?  NON

Augmentation de $D_5$ et $D_5'$

Diminution de $D_5$ et $D_5'$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2407805
- FR 2856007
- US 5435943 A